# DEMANDE DE BREVET EUROPEEN

(11) **EP 0 810 257 A1**
(43) Date de publication de la demande: **03.12.1997**
(21) Numéro de dépôt: 97201548.1
(22) Date de dépôt: 23.05.1997
(51) Int. Cl.: C08J 11/06, C08J 11/04

(54) **Procédé de traitement de broyats de polyoléfine et leur utilisation**

(30) Priorité: 31.05.1996 BE 9600488
(71) Demandeur: SOLVAY POLYOLEFINS EUROPE - BELGIUM (Société Anonyme), 1050 Bruxelles (BE)
(72) Inventeur: Robin, Jean-Jacques, 34830 Clapiers (FR); Bromont, Valérie, 34000 Montpellier (FR); Hannecart, Etienne, 3080 Tervuren (BE); Yernaux, Jean-Marie, 1330 Rixensart (BE); Vandenhende, Bernard, 2811 Leest (BE); Devlieghere, Frank, 9000 Gent (BE)
(74) Mandataire: Destryker, Elise Martine

(57) **Abrégé**

Procédé de traitement de broyats de polyoléfine provenant de récipients à laitage usagés avec au moins un agent choisi parmi le peroxyde d'hydrogène, la vapeur d'eau et l'hydroxyde de sodium en quantité efficace pour désodoriser la polyoléfine.

Broyats obtenus par ce procédé et présentant un niveau d'odeur résiduelle de lait vieilli indécelable.

Utilisation des broyats désodorisés obtenus par ce procédé pour la réalisation d'objets façonnés.

## Description

La présente invention concerne un procédé de traitement de broyats de polyoléfine provenant de récipients à laitage usagés. L'invention concerne en outre les broyats obtenus par ce procédé et leur utilisation pour la réalisation d'objets façonnés.

Les considérations environnementales accroissent de plus en plus l'intérêt du recyclage des matériaux plastiques. Parmi ceux-ci, les polyoléfines sont largement utilisées comme matière première pour fabriquer des récipients destinés à contenir des laitages. La récupération de la polyoléfine pour un usage ultérieur nécessite dans ce cas l'élimination de divers contaminants présents dans les broyats obtenus à partir des récipients usagés. Parmi ces contaminants se trouvent notamment le papier provenant des étiquettes, l'aluminium provenant des opercules et les odeurs de lait vieilli.

Dans le brevet US-A-4368274, il est connu de séparer l'aluminium présent dans des écailles de bouteilles en polyéthylène téréphtalate au moyen d'une solution aqueuse d'hydroxyde de sodium.

Par ailleurs, la demande de brevet EP-A-004601 propose un procédé pour écarter des composés très odorants de particules de polyoléfines au moyen d'un courant de vapeur d'eau. Les ingrédients d'odeur intensive sont définis comme étant des matières organiques ayant un point de fusion de 150 à 250 °C, particulièrement celles qui contiennent de 8 à 10 atomes de carbone et de l'ordre de 12 % en poids d'oxygène.

La demande de brevet DE-A-4322328 décrit, dans son exemple II, le traitement de bouteilles de lait en polycarbonate présentant une odeur de fromage vieilli, par de l'acide peracétique après un lavage classique, qui à lui seul n'est pas suffisant pour éliminer les odeurs de fromage vieilli. Les résultats observés montrent que le niveau d'odeur résiduel obtenu après ce traitement à l'acide peracétique est faible mais pas nul.

L'invention vise à fournir un procédé nouveau de traitement de broyats de polyoléfine provenant de récipients à laitage usagés qui permet d'assurer la désodorisation de ces broyats de polyoléfine par l'élimination substantielle, voire totale, de l'odeur caractéristique de lait vieilli et, dès lors, d'envisager leur réutilisation (recyclage).

A cet effet, l'invention concerne un procédé de traitement de broyats de polyoléfine provenant de récipients à laitage usagés selon lequel on traite les broyats de polyoléfine avec au moins un agent choisi parmi le peroxyde d'hydrogène, la vapeur d'eau et l'hydroxyde de sodium en quantité efficace pour désodoriser la polyoléfine.

Selon l'invention, par broyat, on entend désigner les particules obtenues suite au broyage des récipients à laitage usagés. Ces particules peuvent se présenter sous forme d'écailles, de copeaux, de paillettes, de bandelettes, de plaquettes ou de granules de dimensions moyennes variables selon les grilles utilisées dans le broyeur. Les particules ont habituellement une dimension moyenne supérieure ou égale à 0,1 mm, en particulier supérieure ou égale à 1mm; de préférence supérieure ou égale à 2 mm. Les particules ont habituellement une dimension moyenne inférieure ou égale à 6 cm, en particulier inférieure ou égale à 5 cm, de préférence inférieure ou égale à 3 cm. Les particules obtenues suite au broyage des récipients à laitage usagés ont généralement une épaisseur moyenne supérieure ou égale à 0,1 mm, de préférence supérieure ou égale à 0,5 mm. Elle est généralement inférieure ou égale à 2 cm, de préférence inférieure ou égale à 1 cm. Une série de traitements peuvent être effectués afin que les broyats soient débarrassés du papier, des résidus organiques et de la plus grande partie des fragments de goulots recouverts d'aluminium comme par exemple des opérations de centrifugation, de décantation, d'essorage, de rinçage, de séchage.

Selon l'invention, par récipient à laitage, on entend désigner tout ustensile creux qui peut servir à contenir des laitages comme par exemple des flacons, des bouteilles ou des pots. Par laitage, on entend désigner le lait mais également toute substance alimentaire issue du lait ou en contenant telle que par exemple le lait battu, le lait caillé, les yaourts et les boissons lactées. L'invention s'applique particulièrement aux récipients usagés ayant contenu du lait et tout particulièrement aux bouteilles à lait usagées.

Par quantité efficace d'agent pour désodoriser la polyoléfine, on entend désigner une quantité au moins suffisante pour réduire l'odeur de lait vieilli. Cette quantité dépendra, bien entendu, du niveau de contamination des broyats traités et de l'efficacité de l'agent désodorisant. En pratique, elle s'évaluera dans chaque cas particulier par des essais préliminaires. Pour fixer les idées, en général la quantité efficace de peroxyde d'hydrogène pour réduire l'odeur de lait vieilli peut varier de 0,5 à 4,5 kg de peroxyde d'hydrogène par kg de polyoléfine. La quantité efficace de vapeur d'eau pour réduire l'odeur de lait vieilli varie généralement de 0,5 à 11 kg de vapeur d'eau par kg de polyoléfine. La quantité efficace d'hydroxyde de sodium pour réduire l'odeur de lait vieilli varie en général de 0,04 à 2 kg d'hydroxyde de sodium par kg de polyoléfine.

Le traitement des broyats de polyoléfine provenant de récipients à laitage usagés avec le peroxyde d'hydrogène s'effectue généralement à une température de 60 à 110 °C. La température sera en général supérieure à 60 °C, de préférence supérieure ou égale à 80 °C et, de manière plus que préférée supérieure ou égale à 90 °C. La température sera généralement inférieure à 110 °C, de préférence inférieure ou égale à 100 °C. Une température de 100 °C a donné de bons résultats.

La pression à laquelle s'effectue le traitement des broyats de polyoléfine avec le peroxyde d'hydrogène n'est pas critique. Le plus souvent, le traitement s'effectue à la pression atmosphérique.

La durée totale du traitement des broyats de polyoléfine avec le peroxyde d'hydrogène incluant en plus du temps du traitement proprement dit, la mise en température et la phase de refroidissement s'élève généralement de 30 à 180 minutes. Une durée totale inférieure à 180 minutes, de préférence inférieure ou égale à 140 minutes convient bien. La durée totale est en général supérieure à 30 minutes, de préférence supérieure ou égale à 60 minutes. Une durée totale de 135 minutes a donné de bons résultats.

Le traitement de broyats de polyoléfine avec le peroxyde d'hydrogène est généralement effectué avec une solution aqueuse de peroxyde d'hydrogène de 10 à 35 % en volume. La concentration en peroxyde d'hydrogène dans la solution aqueuse est supérieure à 10 % en volume, de préférence supérieure ou égale à 15 % en volume. De bons résultats ont été obtenus avec une solution aqueuse de peroxyde d'hydrogène de 15 à 35 % en volume.

Après le traitement des broyats de polyoléfine avec le peroxyde d'hydrogène, les broyats sont rincés plusieurs fois avec de l'eau et du méthanol et sont ensuite séchés dans une étuve. Ils peuvent être alternativement lavés et rincés à l'eau puis séchés à l'air chaud.

La durée du traitement des broyats de polyoléfine avec un courant de vapeur d'eau s'élève généralement de 40 à 160 minutes. Une durée supérieure à 40 minutes, de préférence supérieure ou égale à 60 minutes convient bien. De même, les durées de traitement ne dépassent en général pas 120 minutes.

Le débit de vapeur à utiliser pour le traitement des broyats de polyoléfine varie généralement de 1 à 4 kg de vapeur par heure et par kg de polyoléfine. Le débit de vapeur est habituellement supérieur à 1 kg de vapeur par heure et par kg de polyoléfine, de préférence supérieur ou égal à 1,5 kg de vapeur par heure et par kg de polyoléfine. Le débit de vapeur est généralement inférieur à 4 kg de vapeur par heure et par kg de polyoléfine, de préférence inférieur ou égal à 3 kg de vapeur par heure et par kg de polyoléfine. De bons résultats ont été obtenus avec 1,7 kg de vapeur par heure et par kg de polyoléfine, de même qu'avec 2,9 kg de vapeur par heure et par kg de polyoléfine.

Le traitement des broyats de polyoléfine avec de la vapeur d'eau s'effectue généralement à une température inférieure ou égale à 110 °C. De bons résultats ont été obtenus à 100 °C.

La pression à laquelle s'effectue le traitement des broyats de polyoléfine avec de la vapeur d'eau n'est pas critique. Le plus souvent, le traitement s'effectue à la pression atmosphérique.

Avantageusement, le traitement avec un courant de vapeur d'eau s'effectue dans une colonne à stripping.

Après le traitement des broyats de polyoléfine avec de la vapeur d'eau, ceux-ci sont soumis à un séchage à l'air chaud.

Le traitement des broyats de polyoléfine avec de l'hydroxyde de sodium s'effectue généralement à une température de 25 à 110 °C. Une température d'au moins 30 °C et, de préférence, d'au moins 50 °C convient bien. La température ne dépassera en général pas 100 °C et, de manière plus que préférée pas 95 °C. Les meilleurs résultats ont été obtenus à 90 °C.

La pression à laquelle s'effectue le traitement des broyats de polyoléfine avec de l'hydroxyde de sodium n'est pas critique. Le plus souvent, le traitement s'effectue à la pression atmosphérique.

La durée du traitement avec l'hydroxyde de sodium s'élève généralement de 30 à 120 minutes. La durée du traitement est de préférence d'au moins 45 minutes. De même, la durée de traitement est en général inférieure à 120 minutes et, de préférence inférieure ou égale à 90 minutes. Une durée d'environ 60 minutes a donné de bons résultats.

Le traitement des broyats de polyoléfine avec l'hydroxyde de sodium s'effectue généralement au moyen d'une solution aqueuse d'hydroxyde de sodium ayant une concentration massique d'hydroxyde de sodium de 1 à 20 %. La concentration en hydroxyde de sodium est habituellement d'au moins 2 % en masse et, de préférence, d'au moins 3 % en masse. La concentration de la solution aqueuse en hydroxyde de sodium sera inférieure à 20 % en masse et, de préférence inférieure ou égale à 10 % en masse. L'utilisation d'une solution aqueuse d'hydroxyde de sodium à une concentration de 6,6 % massique a donné d'excellents résultats.

Après le traitement des broyats de polyoléfine avec l'hydroxyde de sodium, ceux-ci sont soumis à une séquence de traitements essorage-lavage à l'eau-essorage et sont ensuite séchés.

Parmi les agents désodorisants mis en oeuvre dans le procédé de l'invention, on donne la préférence à la vapeur d'eau et au peroxyde d'hydrogène; ce dernier étant tout particulièrement préféré. Quant à l'hydroxyde de sodium, qui procure une désodorisation très significative mais néanmoins moins poussée que celle obtenue lors du traitement avec de la vapeur d'eau ou lors du traitement avec le peroxyde d'hydrogène, il présente l'avantage de dissoudre l'aluminium résiduaire provenant des opercules des bouteilles et non éliminé au cours des étapes qui précèdent. Le traitement avec l'hydroxyde de sodium permet en outre de ne pas réaliser ou de simplifier certaines opérations préalables au traitement de désodorisation consistant à éliminer les résidus d'aluminium provenant des opercules des bouteilles.

Dans un mode de réalisation particulier de l'invention, le traitement des broyats de polyoléfine provenant de récipients à laitage usagés avec de la vapeur d'eau est précédé par un traitement avec de l'hydroxyde de sodium.

Dans un autre mode de réalisation particulier et préféré, le traitement des broyats de polyoléfine provenant de récipients à laitage usagés avec le peroxyde d'hydrogène est précédé par un traitement avec de l'hydroxyde de sodium.

Dans ces modes particuliers de réalisation, les traitements successifs s'effectuent dans les conditions générales décrites ci-dessus pour les traitements individuels.

Aux fins de la présente invention, on entend désigner par polyoléfine les homopolymères et copolymères avec au moins un comonomère, des oléfines contenant de 2 à 20 atomes de carbone, et de préférence de 2 à 6 atomes de carbone, telles que l'éthylène, le propylène, le butène-1, le méthyl-4 pentène-1 et l'hexène-1. Les polymères de l'éthylène et du propylène sont préférés. Les polymères de l'éthylène sont particulièrement préférés. On peut citer à titre de comonomère de l'éthylène, les alpha-oléfines contenant de 3 à 8 atomes de carbone. Le butène, l'hexène et leurs mélanges sont préférés. La teneur en comonomère dans le polymère d'éthylène est généralement d'au moins 0,1 % en poids, en particulier d'au moins 0,5 % en poids et le plus souvent d'au moins 1 % en poids. La teneur en comonomère est habituellement d'au plus 10 % en poids, plus précisément d'au plus 8 % en poids, les valeurs d'au plus 5 % en poids étant les plus courantes.

Les polymères d'éthylène présentent habituellement un indice de fluidité mesuré à 190 °C sous une charge de 5 kg selon la norme ASTM D 1238 - Condition P (1986) (appelé ci-après MI₅) de 0,3 à 10 g/10 min. L'indice de fluidité MI₅ est d'au moins 0,3 g/10 min, en particulier d'au moins 0,6 g/10 min. Le MI₅ ne dépasse pas en général, 10 g/10 min, le plus souvent pas 6 g/10 min.

Les polymères d'éthylène présentent couramment une masse volumique standard (ou densité) mesurée selon la norme ISO 1183 (1987) de 945 à 965 kg/m³. La masse volumique standard est d'au moins 945 kg/m³, en particulier d'au moins 950 kg/m³, les valeurs d'au moins 952 kg/m³ étant préférées. La masse volumique standard ne dépasse pas, en général, 965 kg/m³, plus précisément pas 962 kg/m³.

L'invention porte également sur les broyats obtenus par le procédé selon l'invention qui présentent un niveau d'odeur résiduelle de lait vieilli indécelable. Ces broyats, débarrassés de la présence de tout contaminant provenant d'une utilisation précédente, peuvent être récupérés (recyclés) pour un usage ultérieur. En particulier, ces broyats peuvent servir à la réalisation de nouveaux objets façonnés. Tout particulièrement, ces broyats peuvent servir à la fabrication de nouveaux récipients utilisables dans l'industrie alimentaire et notamment à la fabrication de nouveaux récipients à laitage. Ils peuvent également être utilisés par exemple pour la réalisation d'objets tels que des récipients destinés à contenir des déchets ou des palettes destinées à la manutention de marchandises.

Le procédé selon l'invention s'applique au traitement de broyats de polyoléfine provenant de récipients à laitage usagés. Il est particulièrement bien adapté au traitement de broyats de polyéthylène provenant de bouteilles à lait usagées.

Les exemples qui suivent sont donnés dans le but d'illustrer l'invention, sans pour autant en limiter la portée.

### Exemple 1

8 kg de copeaux de polyéthylène provenant de flacons à lait usagés et caractérisés par une odeur nauséabonde, de taille assez variable mais inférieure à 3 cm, sont introduits dans un réacteur de 200 litres. 80 litres d'eau oxygénée à 35 % en volume sont ensuite déversés dans le réacteur avant que celui-ci soit fermé et que l'agitation mécanique soit mise en route à 100 tours/minute. La mise en température est réalisée grâce à la circulation de vapeur d'eau à 140 °C dans la double enveloppe du réacteur. La montée en température de 20 à 100 °C est effectuée en 45 minutes, cette température est stabilisée pendant 30 minutes puis la phase de refroidissement de 100 à 90 °C est amorcée et dure 60 minutes. Une fois la température de 90 °C atteinte, l'eau oxygénée seule est vidangée. Le polyéthylène est ensuite rincé par deux fois 100 litres d'eau. A la fin du deuxième rinçage, toute l'eau ayant été évacuée, les copeaux sont extraits du réacteur grâce à un aspirateur. Après ce deuxième rinçage à l'eau, les 8 kg de copeaux sont rincés par 20 litres de méthanol et séchés dans une étuve à 40 °C durant 14 heures.

Un test d'odeur est ensuite réalisé sur les copeaux de polyéthylène obtenus. Le test d'odeur consiste à laisser reposer pendant 14 heures, 10 g de polyéthylène dans une boîte de pétri et dans une étuve à 80 °C. Après le temps fixé, les boîtes de pétri sont ouvertes et senties. Une note de 0 à 10 leur est attribuée, 0 signifiant la disparition totale de l'odeur et 10 celle de l'odeur des copeaux non traités. Cette note caractérise "l'odeur à chaud". Une seconde note est attribuée après 2 heures de refroidissement à température ambiante. Cette note caractérise "l'odeur à froid".

La note accordée après le traitement au peroxyde d'hydrogène explicité ci-dessus est de 0 pour l'odeur à froid comme pour l'odeur à chaud alors que le test d'odeur appliqué aux copeaux non traités (témoin) donne une note de 10 pour l'odeur à froid comme pour l'odeur à chaud.

### Exemple 2

26 kg d'écailles de polyéthylène de 8 mm de diamètre provenant de flacons à lait usagés, caractérisées par une odeur nauséabonde (niveau d'odeur 4), sont introduites dans une colonne en verte, la hauteur du lit fixe de paillettes au-dessus de la plaque perforée est d'approximativement 1 m. Les écailles sont alors soumises à un stripping à la vapeur d'eau à 100 °C. Le débit de vapeur est de 1,7 kg de vapeur par heure et par kg de polyéthylène. Après 60 minutes, le niveau d'odeur est presque indécelable (niveau d'odeur 0,5); après 120 minutes, il peut être considéré comme nul (inférieur à 0,5). Après le traitement avec la vapeur d'eau, les broyats sont séchés avec de l'air chaud à une vitesse superficielle de 0,25 m/sec pendant 3-4 heures; la température de l'air étant de l'ordre de 50-85 °C.

Le test d'odeur utilisé pour la détermination du niveau d'odeur consiste à disposer 10 g d'écailles de polyéthylène ayant subi les traitements indiqués ci-dessus dans un flacon en verte fermé et à laisser reposer jusqu'à ce que la température atteigne la température ambiante. 10 g d'écailles présentant une odeur nauséabonde et non traitées d'une part, et 10 g d'écailles de résine vierge d'autre part, sont également disposées dans un flacon en verre fermé. Les différents flacons sont ouverts en même temps et sentis par 4 personnes différentes. Une note de 0 à 4 est attribuée, 0 correspond à l'absence d'odeur (résine vierge) et 4 correspond à l'odeur maximale (écailles non traitées). La note rélevée correspond à la moyenne des notes données par les 4 personnes réalisant le test. En dessous de 0,5, le niveau d'odeur est considéré comme indécelable, certaines personnes ne détectent en effet plus aucune odeur.

### Exemple 3

30 kg d'écailles de polyéthylène de 8 à 20 mm de diamètre, provenant du broyage de flacons à lait usagés, contenant 0,41 g/kg d'aluminium et présentant une odeur nauséabondante (niveau d'odeur 4), sont introduits dans une cuve agitée en acier inoxydable de 200 litres munie d'une double enveloppe. La mise en température est réalisée grâce à la circulation de vapeur d'eau dans la double enveloppe du réacteur. Le traitement avec 130 litres d'une solution aqueuse de NaOH 6,6 % massique est ensuite réalisé pendant 1 heure, à 90 °C. Après ce traitement, les broyats sont soumis à une séquence de traitements essorage-lavage à l'eau à 22 °C-essorage et sont ensuite séchés.

Dans ces conditions, on constate que le niveau d'odeur résiduelle est de 1,81 après le traitement à la soude. Par ailleurs, tout l'aluminium résiduaire est dissout.

Le test d'odeur utilisé pour la détermination du niveau d'odeur consiste à disposer 10 g d'écailles de polyéthylène ayant subi le traitement indiqué ci-dessus dans un flacon en verte fermé et à laisser reposer jusqu'à ce que la température atteigne la température ambiante. 10 g d'écailles présentant une odeur nauséabonde et non traitées d'une part, et 10 g d'écailles de résine vierge d'autre part, sont également disposées dans un flacon en verte fermé. Les différents flacons sont ouverts en même temps et sentis par 4 personnes différentes. Une note de 0 à 4 leur est attribuée, 0 correspond à l'absence d'odeur (résine vierge) et 4 correspond à l'odeur maximale (écailles non traitées). La note relevée correspond à la moyenne des notes données par les 4 personnes réalisant le test.

### Exemple 4

Des écailles de polyéthylène provenant de flacons à lait usagés, caractérisées par une odeur nauséabonde, sont tout d'abord soumises à un traitement avec une solution aqueuse d'hydroxyde de sodium dans les conditions définies dans l'exemple 3 pour être ensuite soumises à un traitement avec un courant de vapeur d'eau dans une colonne de stripping selon l'exemple 2. On observe que l'odeur nauséabonde est complétement éliminée. Par ailleurs, tout l'aluminium résiduaire est éliminé.

Des tests organoleptiques sont réalisés. Pour ce faire, des solutions constituées d'eau potable sont stockées à température ordinaire pendant 2 jours dans différentes bouteilles réalisées au départ de polyéthylène recyclé qui a éventuellement été traité par l'hydroxyde de sodium et/ou un courant de vapeur d'eau. Une bouteille réalisée avec du polyéthylène vierge sert de témoin. 24 juges ont été entraînés pour reconnaître le goût typique du lait vieilli. Le test pour les juges consiste en une épreuve triangulaire. On présente aux juges deux solutions aqueuses à comparer à savoir la solution aqueuse qui a été en contact avec le matériel vierge et celle qui a été en contact avec le matériel recyclé et éventuellement traité.

La première solution est présentée en 2 exemplaires, la seconde en un exemplaire. La tâche des juges est de déterminer quel est l'échantillon non répété. Les résultats sont les suivants :
- eau de la bouteille constituée de polyéthylène recyclé et non traité: 15 goutteurs sur 24 choisissent l'échantillon non répété;
- eau de la bouteille constituée de polyéthylène recyclé et traité par l'hydroxyde de sodium : 12 goutteurs sur 24 choisissent l'échantillon non répété;
- eau de la bouteille constituée de polyéthylène recyclé et traité par l'hydroxyde de sodium et ensuite par un courant de vapeur d'eau : 5 goutteurs sur 24 choisissent l'échantillon non répété.

Le module d'élasticité en traction, mesuré sur des éprouvettes coupées dans la paroi d'une bouteille constituée de polyéthylène recyclé et traité par l'hydroxyde de sodium et un courant de vapeur d'eau, est identique à celui mesuré dans les mêmes conditions pour des éprouvettes coupées dans la paroi d'une bouteille constituée de polyéthylène vierge, à savoir 300 MPa. Il en est de même pour la tension maximale élastique qui est de 19 MPa pour le témoin comme pour le produit traité par l'hydroxyde de sodium et un courant de vapeur d'eau.

## Revendications

1. Procédé de traitement de broyats de polyoléfine provenant de récipients à laitage usagés caractérisé, en ce qu'on traite les broyats de polyoléfine avec au moins un agent choisi parmi le peroxyde d'hydrogène, la vapeur d'eau et l'hydroxyde de sodium en quantité efficace pour désodoriser la polyoléfine.

2. Procédé selon la revendication 1, caractérisé en ce qu'on traite les broyats de polyoléfine avec le peroxyde d'hydrogène.

3. Procédé selon la revendication 2, caractérisé en ce que le traitement avec le peroxyde d'hydrogène s'effectue à une température de 60 à 110 °C et pendant une durée de 30 à 180 minutes.

4. Procédé selon la revendication 1, caractérisé en ce qu'on traite les broyats de polyoléfine avec de la vapeur d'eau et en ce que le traitement s'effectue au moyen d'un courant de vapeur d'eau pendant une durée de 40 à 160 minutes et avec un débit de vapeur de 1 à 4 kg par heure et par kg de polyoléfine.

5. Procédé selon la revendication 1, caractérisé en ce qu'on traite les broyats de polyoléfine avec de l'hydroxyde de sodium et en ce que le traitement s'effectue à une température de 25 °C à 110 °C et pendant une durée de 30 à 120 minutes.

6. Procédé selon l'une quelconque des revendications 1, 2, 3 et 5, caractérisé en ce que le traitement avec le peroxyde d'hydrogène est précédé d'un traitement avec de l'hydroxyde de sodium.

7. Procédé selon l'une quelconque des revendications 1, 4 et 5, caractérisé en ce que le traitement avec de la vapeur d'eau est précédé d'un traitement avec de l'hydroxyde de sodium.

8. Procédé selon l'une quelconque des revendications 1 à 7 selon lequel la polyoléfine est un polymère de l'éthylène choisi parmi les homopolymères et les copolymères de l'éthylène.

9. Broyats pouvant être obtenus selon le procédé conforme à l'une quelconque des revendications 1 à 8 présentant un niveau d'odeur résiduelle de lait vieilli indécelable.

10. Utilisation des broyats désodorisés selon le procédé conforme à l'une quelconque des revendications 1 à 8 pour la réalisation d'objets façonnés.
